# EUROPEAN PATENT APPLICATION

(11) **EP 3 744 570 A1**
(43) Date of publication of application: **02.12.2020**
(21) Application number: 19382427.3
(22) Date of filing: 29.05.2019
(51) Int. Cl.: B60R 1/12

(54) **MOTOR VEHICLE REARVIEW MIRROR ASSEMBLY**

(71) Applicant: Fico Mirrors S.A., 08028 Barcelona (ES)
(72) Inventor: GÓMEZ TIMONEDA, David, 08232 VILADECAVALLS (ES); MANCEBO PRIETO, Ana, 08232 VILADECAVALLS (ES)
(74) Representative: ZBM Patents - Zea, Barlocci & Markvardsen

(57) **Abstract**

The motor vehicle rearview mirror assembly (100) comprises a housing (200) comprising at least a first housing portion (210); a translucent cover (500) comprising a first surface and a second surface, the first surface being closer to the user's eyes; and a reflective element (300) received in the housing (200), the reflective element (300) having a front surface (310) adjacent to the second surface of the translucent cover (500) and an opposite rear surface (320). The reflective element (300) is attached to the translucent cover (500).

## Description

The present disclosure refers to interior rearview mirror assemblies for motor vehicles comprising a housing and a reflective element received in the housing. The present disclosure finds application, for example, in intelligent rearview mirror systems (IRMS) that combine a standard rearview mirror with an integrated display suitable for displaying images from a camera fitted in the vehicle. IRMSs can be operated as a mirror or as a monitor, or both, according to the driver's needs.

### BACKGROUND

Intelligent rearview mirror systems are currently under development in the automotive field with which the user is allowed to switch between a standard mode where the IRMS acts as a traditional rearview mirror and an intelligent mode where images from a camera mounted on the back of the vehicle are displayed on a built-in LCD display mounted in the mirror system.

Motor vehicle IRMSs typically include a housing that accommodates therein a reflective element. The reflective element includes one or more glass substrates. One of the glass substrates is arranged such that a front surface thereof is positioned facing a driver of a vehicle.

For example, US9090212 discloses an interior rearview mirror assembly for a vehicle. The rearview mirror assembly comprises a housing and an electro-optic reflective element. The reflective element includes a front glass substrate having a front surface facing the driver of a vehicle and a rear glass substrate arranged behind the front glass substrate and having front and rear surfaces with an electro-optic medium disposed therebetween.

Due to the arrangement of the front substrate facing the driver, the size of the front substrate is usually different from that of the rear substrate. Typically, a surface area of the front surface of the front glass substrate is larger than a surface area of the front surface of the rear glass substrate. Manufacture of interior rearview mirror assemblies with substrates having different sizes, fragile material as glass, and sometimes also different features, undesirably increases complexity and costs. Substrates having different thicknesses also become a problem.

### SUMMARY

A motor vehicle rearview mirror assembly is provided herein with which the above disadvantages are avoided or at least minimized while providing significant advantages as it will be described below.

Within the context of the present disclosure, a surface arranged closer to the user's eyes refers to a particular position of such surface when the mirror assembly is already mounted on a surface in a vehicle interior. Also within the context of the present disclosure, the term "front" refers to any forward position with respect to a specific part of the present rearview mirror assembly when viewed from the user's eyes located in front of the rearview mirror assembly. Also, within the context of the present disclosure, both the terms "behind" and "rear" refer to any position following a specific part of the present rearview mirror assembly when viewed from the front of the rearview mirror assembly.

A motor vehicle rearview mirror assembly is disclosed herein with which the above-discussed disadvantage is solved. The present disclosure applies to at least one of standard rearview mirror assemblies and intelligent rearview mirror systems (IRMS) in motor vehicles.

The present motor vehicle rearview mirror assembly comprises a housing. The housing comprises at least a first housing portion. In some cases, the housing may further comprise at least a second housing portion attached thereto or formed integral therewith. In some cases, the housing may further comprise a third housing portion attached to the second housing portion or formed integral therewith.

The present motor vehicle rearview mirror assembly also comprises a translucent cover made, for example, of plastic. Preferably, the translucent cover may be transparent. The translucent may be attached to the housing. The translucent cover comprises a first surface and a second surface, the first surface is arranged closer to the user's eyes. A perimeter edge is defined in the front surface of the translucent cover. Such perimeter edge may have a number of different shapes depending on the design such as for example rounded or slanted edges as required. The front surface of the translucent cover may include at least one of the following coatings: anti-finger coating, hard coating, anti-glare coating, antireflective coating. The above mentioned third housing portion may be configured as a bezel extending to cover at least one side or front portion of the translucent cover. As a result, a cost effective assembly is obtained due to low-cost manufacturing processes as compared to bevelling a translucent substrate.

A reflective element is also provided attached to the translucent cover and received in the housing. Attachment of the reflective element to the translucent cover may be performed by any suitable means such as for example a double sided, high transparent, optical clear adhesive (OCA).

The reflective element has a front surface adjacent to the second surface of the translucent cover and an opposite rear surface. A front surface area of the translucent cover may be greater than a front surface area of the reflective element. The thickness of the translucent cover may be also greater than that of the reflective element or at least a thickness of one substrate of the reflective element. The reflective element may be at least one selected among an electrochromic (EC) reflective element, an electro-optic (EO) reflective element, liquid crystal fluid incorporating a dichroic dye, a variable reflectance reflective element, a variable transmittance reflective element, a nematic liquid crystal reflective element, a cholesteric liquid crystal reflective element, a mirror element, a prismatic mirror element.

The reflective element comprises at least one substrate. The substrate may be a glass substrate. When two or more substrates are included in the reflective element, all the substrates may be manufactured having the same area and same thickness. As a result, costs can be advantageously reduced.

In one example, the reflective element may be a variable reflectance reflective element (VRM) comprising a first polarizer (absorptive) element, a first translucent substrate, a second translucent substrate, liquid crystal medium sealed between the first and second substrates and a second polarizer (reflective) element. The VRM allows to reflect and transmit light. The amount of light transmitted or reflected by the VRM will depend on a voltage applied to the liquid crystal providing a dimming function. With this variation of the transmitted or reflected light one can dimmer the glare from the headlights of the rear vehicles (dimming function) and/or the amount of light from the display transmitted through the reflective element is optimized.

As stated above, the housing may further comprise a second housing portion. Said second housing portion is configured as a rim that is part of or is attached to the first housing portion. The second housing portion is arranged adjacent to the translucent cover at least partially surrounding the reflective element. It may be preferred that the rim has a rim protrusion projecting therefrom that at least surrounds partially the reflective element, preferably, completely. In one example the rear surface of the translucent cover is attached both to the reflective element and to the rim, preferably to the rim protrusion.

Preferably, the rim is arranged such that no part thereof is behind a rear surface of the reflective element. This allows obstacles between a possible display placed behind the reflective element, that will be described below, and the reflective element to be avoided. It is also preferred that the rim is arranged such that no part of the rim encompasses the edges or the front surface of the translucent cover in which case the rearview mirror system is of the so-called frameless type, that is, with no frame. As stated above, in this case, no part of the rim extends beyond the edges of the front surface of the translucent cover. In one example, the thickness of the translucent cover may be equal to or greater than 2.5 mm. Preferably, the radius of the edge of the translucent cover may be equal to or greater than 2.5 mm. The above thickness value may be advantageous for example in rearview mirror system of the so-called frameless type. In other examples, the rearview mirror system may have the rim configured as the so-called with frame type, that is, having a frame or the above mentioned bezel extending or not beyond the edges or the front surface of the translucent cover, or configured as the so-called flush frame type, that is having a frame or the above mentioned bezel flush mounted to the front surface of the translucent cover. Rearview mirror assemblies with different types and shapes of frames can be therefore manufactured without increasing costs.

A display may be provided such that the rearview mirror assembly can operate according to a mirror mode, as stated above, thanks to the reflective element, and according to a display mode acting as a monitor displaying images from a camera that captures images of the vehicle environment, preferably, the rear part of the vehicle, according to the driver's needs. The display is also received within the housing, adjacent the rear surface of the reflective element. More particularly, the display may be attached to the housing. A front surface area of the display may be greater than that of the reflective element. The front surface area of the display is formed in the display area, where images are displayed, and the frame. The frame of the display itself might be concealed to the user by the rim protrusion itself. A wide range of different displays, even standard displays for other applications can be fitted in the mirror assembly such that costs can be reduced due to concealing of the frame by the rim protrusion. Also, if a display is provided, the above mentioned rim may be arranged to surround the display. Also, between the rear surface of the reflective element and the display a gap may be defined. The display is attached to the housing, preferably to the rim and preferably to the rim protrusion. The attachment of the display may be for example by sandwiching between the first and second housing portions. One attaching portion of the display is thus attached on corresponding projections of the first and second housing portions.

In rearview mirror systems of the so-called frameless type, a further variant is with the translucent cover directly attached to the reflective element which is in turn directly attached to the display which is in turn attached to the housing. Depending on requirements, the translucent cover could also be directly attached to the housing or not.

At least one portion of the reflective element is preferably arranged such that it does not extend beyond a rim projection rear part. As a result, no part of the reflective element is behind the rear surface of the rim and thus contact between the reflective element and the display is avoided. However, in other variants, a rear surface of the reflective element projects from a rim rear surface when a gap is defined by display attachment considering the reflective element exceeds the protrusion rim rear portion, for example in the variant in which the display is attached to a rim rear portion with a foam suitably sized to form said gap.

A mirror print layer may be provided on the rear surface of the translucent cover. Such mirror print layer is suitable for at least partially concealing the rim. It may be also advantageous to provide a film suitable to avoid annoying effects that make the image not good enough due to the external light is provided on the translucent cover. Said film may be for example a non-reflective translucent, solar retarder film (SRF). Furthermore, the translucent cover may be provided with a coating. For example, the translucent cover front surface may include at least one of an anti-finger coating, hard coating, anti-glare coating, an antireflective coating.

With the above described configuration, a rearview mirror assembly is obtained that is advantageously much more cost effective as compared to prior art rearview mirror assemblies as a result of its manufacturing process involving substrates having the same geometrical features. Also with the above described configuration, a great number of different frames can be applied to the rearview mirror assembly.

### BRIEF DESCRIPTION OF THE DRAWINGS

Non-limiting examples of the present disclosure will be described in the following, with reference to the appended drawings, in which:
Figure 1 is a diagrammatic fragmentary sectional view of one example of the motor vehicle rearview mirror assembly;
Figure 2 is a general exploded view of the present rearview mirror assembly;
Figure 3 is a fragmentary sectional view of a first variant of the rearview mirror assembly having a flush frame surrounding the translucent cover;
Figure 4 is a fragmentary sectional view of a second variant of the rearview mirror assembly with a frame at least overlapping a portion of the front surface of the translucent cover;
Figure 5 is a fragmentary sectional view of a third, frameless type of the rearview mirror assembly;
Figure 6 is an enlarged detail sectional view of the variant of the rearview mirror assembly shown in figure 5; and
Figure 7 shows one example of a frameless- type rearview mirror assembly where the translucent cover is attached to the reflective element.

### DETAILED DESCRIPTION

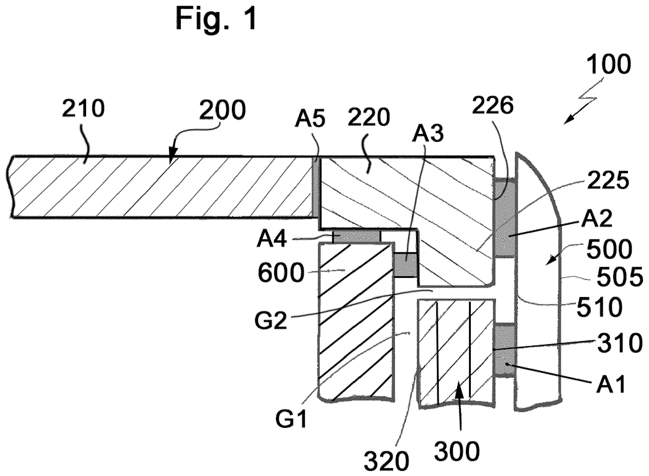

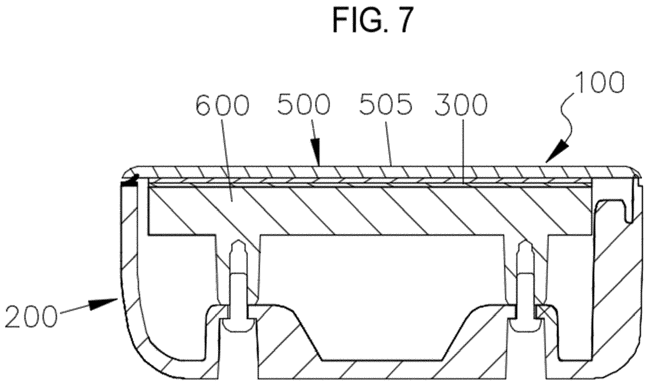

Examples of the present motor vehicle rearview mirror assembly are disclosed referring to figures 1-7 of the drawings. In said figures, the motor vehicle rearview mirror assembly has been indicated as a whole by reference numeral 100. As used herein, the term attachment refers to any type of bond between two parts without excluding any possibility, even the case in which the two parts are made integral with each other.

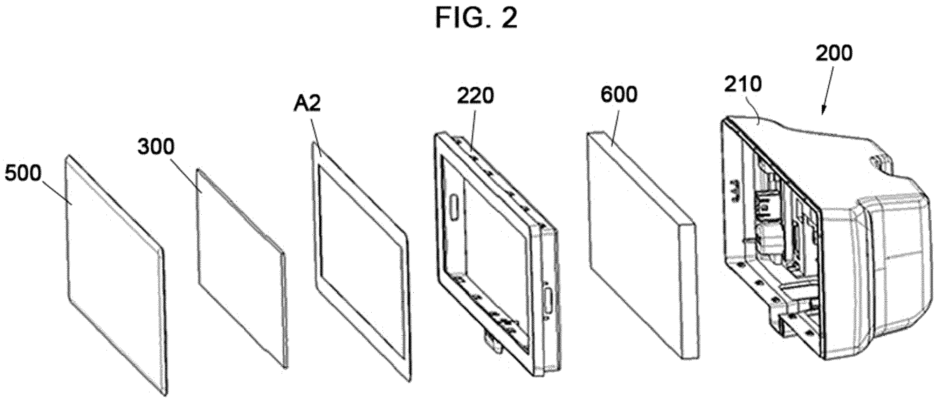

The motor vehicle rearview mirror assembly 100 comprises a housing 200. The housing 200 is suitably configured to receive several parts of the mirror assembly 100 therein that will be described below. In the example shown, the housing 200 comprises a first housing portion 210 and a second housing portion 220 attached together through attachment A5 as shown in figure 1 of the drawings. The second housing portion 220, in the example, is configured as a rim 220 and will be described further below. Depending on the case, the rim 220 may act as a frame or bezel 227 as it will be described below referring to figures 2-4.

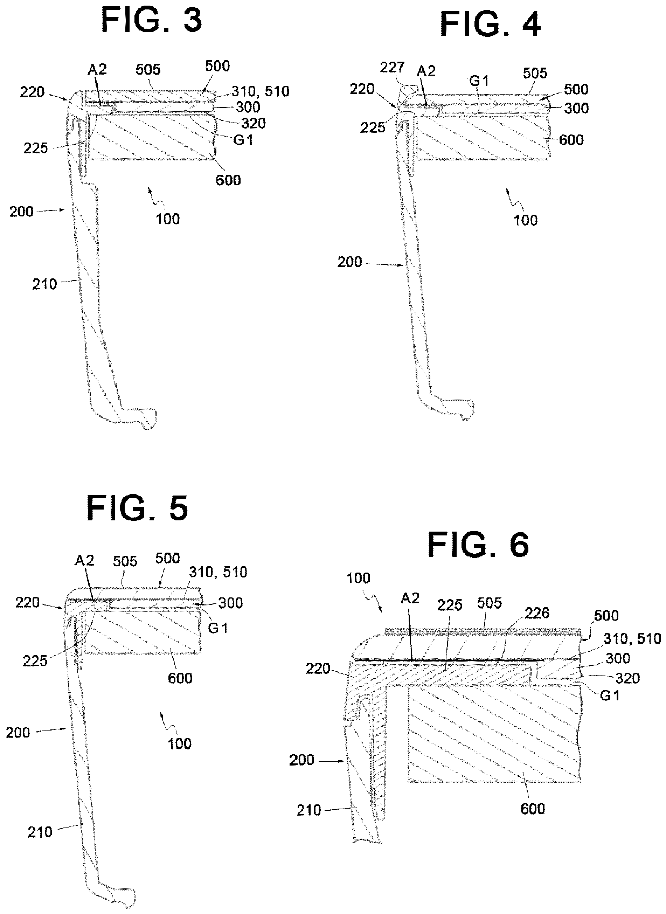

The motor vehicle rearview mirror assembly 100 also comprises a translucent cover 500 made of plastic. Other suitable materials for the translucent cover 500 are of course possible. The translucent cover 500 may be attached to the housing 200. The translucent cover 500 comprises a front surface 505 that is arranged closer to the user's eyes, that is preferably at an outermost position relative to the housing 200 when the mirror assembly 100 is mounted on a surface in a vehicle interior, except for the case shown in figure 4. The translucent cover 500 also comprises a rear surface 510. A perimeter edge is defined in the front surface 505 of the translucent cover 500 which may exhibit a number of different shapes as required.

A reflective element 300 comprising at least one glass substrate or mirror glass is received within the housing 200. Specifically, the reflective element 300 is attached through attachment A1 as shown in figure 1 of the drawings to the translucent cover 500 by means of, for example, a double sided, high transparent, optical clear adhesive (OCA). Other direct or indirect attaching means are of course not ruled out. The reflective element 300 has a front surface 310 that is arranged adjacent to the rear surface 510 of the translucent cover 500 as shown in figures 2-4. The reflective element 300 further includes a rear surface 320 opposite the front surface 310. As shown in the figures, an area of the front surface 505 of the translucent cover 500 is greater than an area of the front surface 310 of the reflective element 300.

In the examples shown, the reflective element 300 is a variable reflectance reflective element (VRM) suitable for allowing light to be reflected and transmitted. The VRM comprises a first polarizer or absorptive element, a first translucent substrate, liquid crystal medium, a second translucent substrate, and a second polarizer or reflective polarizer element. The amount of light transmitted or reflected by the VRM depends on a voltage applied to the VRM for dimming glare from for example, the headlights of rear vehicles.

As stated above, the rim 220 is attached to the first housing portion 210. In the example shown in figure 1, the rim 220 is attached to the first housing portion 210 through attachment A5. In turn, the rim 220 is attached to the translucent cover 500 through attachment A2. The housing 200 in the example shown in figure 4 has a third housing portion 227. The third housing portion 227 is configured as the above mentioned bezel extending to cover at least one side or front portion of the translucent cover 500. The rim 220 is arranged surrounding the translucent cover 500 as shown in the examples of figures 3 and 4. Such specific arrangement allows the rim 220 to act as a frame or bezel 227 for the translucent cover 500. Depending on the extent of the rim 220 covering a side area of the translucent cover 500, several variants of the mirror assembly 100 may exist. For example, in a first variant, the rim 220 is configured to act as a frame surrounding the translucent cover 500 partially covering a side area thereof. The rim 220 could even act as a bezel not only covering a side area of the translucent cover 500 but also a portion of the front surface 505 of the translucent cover 500. In a second variant shown in figure 3, the rim 220 is configured to act as a frame that is flush mounted to the front surface 505 of the translucent cover 500, fully covering the side area thereof. Figure 5 shows a third variant of the mirror assembly 100 corresponding to a frameless assembly where the rim 220 does not act as a frame and it does not extend covering at least one portion of the side area of the translucent cover 500. The thickness of the translucent cover 500 is preferred to be greater than or equal to 2.5 mm. Preferably, the radius of the edge of the translucent cover may be equal to or greater than 2.5 mm.

As shown in the enlarged view of figure 6, a rim protrusion 225 projects from the rim 200 and surrounds the reflective element 300. The rear surface 510 of the translucent cover 500 is attached both to the reflective element 300 through the attachment A1 and to a front surface 226 of the rim 220 in the above mentioned rim protrusion 225 through attachment A2.

A display 600 is received within the housing 200 attached thereto. The rim 220 is arranged such that no part thereof is behind the rear surface 320 of the reflective element 300. As a result, obstacles existing between the display 600 and the reflective element 300 are avoided. As shown in figures 5 and 6, no part of the rim 220 encompasses the edges or the front surface 505 of the translucent cover 500 in a rearview mirror system 100 having no frame, in which case no part of the rim 220 extends beyond the edges of the front surface 505 of the translucent cover 500, too.

The display 600 is positioned adjacent the rear surface 320 of the reflective element 300. The display 600 may be attached to the rim protrusion 225 through attachment A3 as shown in figure 1 and/or to the rim 220 through attachment A4 surrounding the display 600. Attachment A4 may be by screwing or by sandwiching between the first and second housing portions 210, 220 with one portion of the display 600 in therebetween. A surface area of the display 600 is greater than a surface area of the reflective element 300. As a result, standard displays having a frame can be employed thus reducing costs since the frame may be concealed to the user level by the rim protrusion 225.

Between the rear surface 320 of the reflective element 300 and the display 600 a first gap G1 is defined. Also, between the reflective element 300 and the housing 200, preferred to the rim protrusion 225, a second gap G2 is defined. Gaps G1, G2 allow direct contact between parts made of different materials to be avoided. As a result, breakages during assembly or undesired expansions due to temperature changes can be advantageously avoided.

## Claims

1. Motor vehicle rearview mirror assembly (100), comprising:
- a housing (200) comprising at least a first housing portion (210);
- a translucent cover (500) comprising a first surface and a second surface, the first surface being closer to the user's eyes;
- a reflective element (300) received in the housing (200), the reflective element (300) having a front surface (310) adjacent to the second surface of the translucent cover (500) and an opposite rear surface (320);
wherein the reflective element (300) is attached to the translucent cover (500).

2. The assembly (100) according to claim 1, wherein the translucent cover (500) is attached to the housing (200)

3. The assembly (100) according to claim 1 or 2, wherein the housing (200) further comprises at least a second housing portion configured as a rim (220) that is part of or is attached to the first housing portion (210) and arranged adjacent to the translucent cover (500) to at least partially surround the reflective element (300).

4. The assembly (100) according to claim 3, wherein the rim (220) has a rim protrusion (225) projecting therefrom that surrounds at least partially the reflective element (300).

5. The assembly (100) according to claim 4, wherein the rear surface (510) of the translucent cover (500) is attached both to the reflective element (300) and to the rim protrusion (225).

6. The assembly (100) according to any of the claims 1-5, wherein a front surface area of the translucent cover (500) is greater than a front surface area of the reflective element (300).

7. The assembly (100) according to any of the claims 1-6, wherein a display (600) is arranged adjacent the rear surface (320) of the reflective element (300).

8. The assembly (100) according to claim 7, wherein the rim (220) is arranged to surround the display (600).

9. The assembly (100) according to claim 7 or 8, wherein a gap (G1) is defined between the rear surface (320) of the reflective element (300) and the display (600).

10. The assembly (100) according to claim 9, wherein the reflective element (300) is attached to the display (600).

11. The assembly (100) according to any of the claims 3-10, wherein a mirror print layer is provided on the rear surface (510) of the translucent cover (500) suitable for at least partially concealing the rim (220).

12. The assembly (100) according to any of the claims 1-11, wherein a front surface area of the display (600) is greater than that a surface of the reflective element (300).

13. The assembly (100) according to any of the claims 1-12, wherein the display (600) is attached to the housing (200).

14. The assembly (100) according to any of the claims 1-13, wherein the translucent cover (500) is made of plastic.

15. The assembly (100) according to any of the claims 1-14, wherein the thickness of the translucent cover (500) is equal to or greater than 2.5 mm.
